## Europäisches Patentamt
### European Patent Office
### Office européen des brevets

(19)

(11) Veröffentlichungsnummer: **0 028 284**
**B1**

(12) **EUROPÄISCHE PATENTSCHRIFT**

(45) Veröffentlichungstag der Patentschrift: **28.12.83**

(21) Anmeldenummer: **80103756.5**

(22) Anmeldetag: **02.07.80**

(51) Int. Cl.³: **B 29 F 3/10, F 28 F 21/06, F 24 J 3/02**

(54) **Wärmetauscher aus Kunststoff.**

(30) Priorität: **26.09.79 DE 7927236 U**
**03.03.80 DE 3008055**

(43) Veröffentlichungstag der Anmeldung:
**13.05.81 Patentblatt 81/19**

(45) Bekanntmachung des Hinweises auf die Patenterteilung:
**28.12.83 Patentblatt 83/52**

(84) Benannte Vertragsstaaten:
**FR GB IT**

(56) Entgegenhaltungen:
**DE - A - 2 505 015**
**DE - A - 2 509 355**
**DE - A - 2 554 239**
**DE - A - 2 657 468**
**DE - A - 2 719 128**
**DE - A - 2 719 273**
**DE - A - 2 729 734**
**DE - U - 7 702 562**
**FR - A - 2 134 147**

(73) Patentinhaber: **Röhm GmbH**
**Kirschenallee Postfach 4242**
**D-6100 Darmstadt 1 (DE)**

(72) Erfinder: **Vetter, Heinz, Dr. Ing.**
**Taunusstrasse 92**
**D-6101 Rossdorf (DE)**
Erfinder: **Riedel, Werner**
**Stiftstrasse 44**
**D-6109 Mühltal (DE)**

Courier Press, Leamington Spa, England.

Wärmetauscher aus Kunststoff

Die Erfindung betrifft einen Wärmeauscher aus Kunststoff, bestehend aus einem extrudierten, plattenförmigen Austauscherkörper aus Kunststoff, der aus zwei parallelen, ebenen Außenwänden und einer Vielzahl von diese verbindenden Stegen aufgebaut ist und worin zwischen den Außenwänden und den Stegen eine Vielzahl von parallelen, durchlaufenden, an den Stirnseiten des Austauscherkörpers endenden Durchflußkanälen gebildet werden, sowie aus zwei Sammelrohren aus Kunststoff, die mit dem Austauscherkörper an dessen Stirnseiten mittels einer umhüllenden, auf den Austauscherkörper übergreifenden Schicht aus Kunststoff verbunden sind und in die die Durchflußkanäle einmünden. Wärmetauscher mit diesen Merkmalen sind aus der DE—OS 26 57 468 bekannt. Hierbei werden die Sammelrohre und eine Vielzahl von seitlichen Verbindungsröhrchen vorfabriziert. Die vorfabrizierten Sammelrohre werden dann so auf die Stirnseiten des Austauscherkörpers aufgesetzt, daß die Verbindungsröhrchen in die Durchflußkanäle hineinragen, und mit dem Austauscherkörper verbunden. Die Verbindung kann mittels eines Linien-Schweißgerätes oder durch Vergießen mit Kunststoff hergestellt werden. Im letztgenannten Fall werden die Sammelrohre mit einer auf den Austauscherkörper übergreifenden Schicht umhüllt und auf diese Weise damit verbunden.

Ähnliche Wärmetauscher sind aus den DE—OS 24 05 015 und 27 19 273 bekannt. Dort wird die Verbindung der Sammelrohre mit dem Austauscherkörper durch eine Raupe aus schmelzflüssigem Kunststoff, die auf die Berührungslinie zwischen diesen Teilen aufgebracht wird, hergestellt.

Die vorausgehende Herstellung des Sammelrohres und das Anbringen der Verbindungsröhrchen stellt den aufwendigsten Teil der Herstellung des Wärmetauschers dar. Das Sammelrohr muß mit einer Reihe von Bohrungen versehen werden, in welche die einzelnen, getrennt hergestellten Verbindungsröhrchen eingesetzt werden. Die Herstellung eines langen Sammelrohres mit kleinem Innendurchmesser und angeschlossenen Verbindungsröhrchen in einem einzigen Arbeitsgang durch Spritzgießen aus Kunststoff wäre mit erheblichen technischen Schwierigkeiten verbunden.

Die Wärmetauscher gemäß der Erfindung erfüllen die gleichen Aufgaben wie die bekannten Wärmetauscher, sind jedoch wesentlich einfacher herzustellen. Erfindungsgemäß sind die Sammelrohre jeweils aus wenigstens zwei in Längsrichtung angeordneten Segmenten zusammengesetzt sind, auf die die umhüllende Schicht mittels eines relativ zum Sammelrohr bewegten Formwerkzwugs aufextrudiert ist.

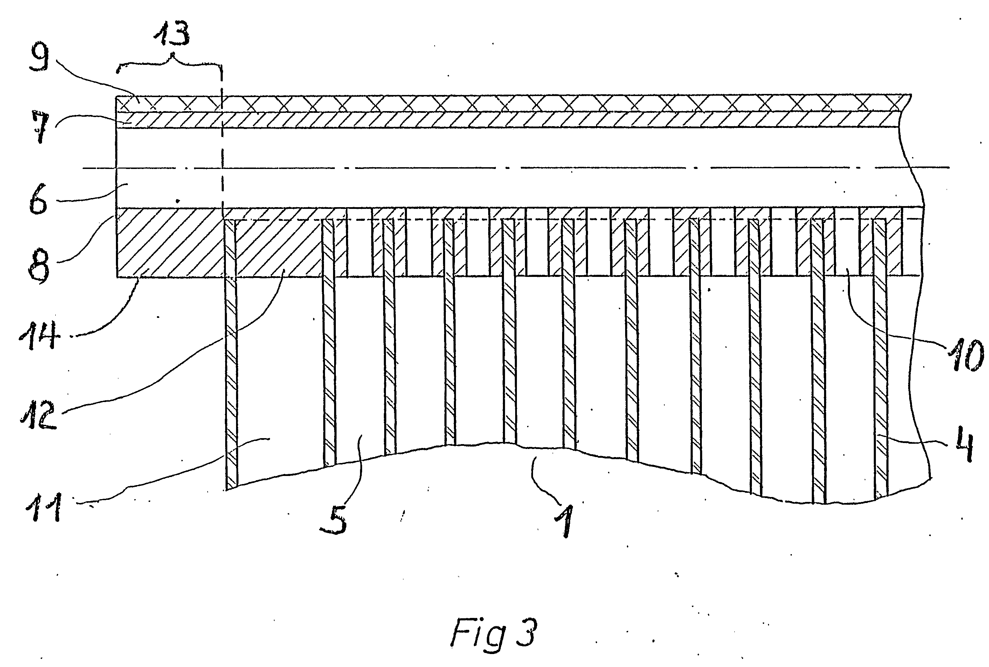

Die Erfindung ist in den Figuren 1 bis 3 beispielsweise dargestellt.

Figur 1 zeigt einen Querschnitt durch den Rand des Wärmetauschers mit dem angeschlossenen Sammelrohr und im oberen Teil die Segmente, aus denen der innere Teil des Sammelrohres zusammengesetzt ist.

Figur 2 stellt eine andere Ausführung der Neuerung mit einer anderen Teilungsebene der Sammelrohrsegmente dar.

Figur 3 zeigt einen Längsschnitt durch den in Figur 1 dargestellten Abschnitt des Wärmetauschers.

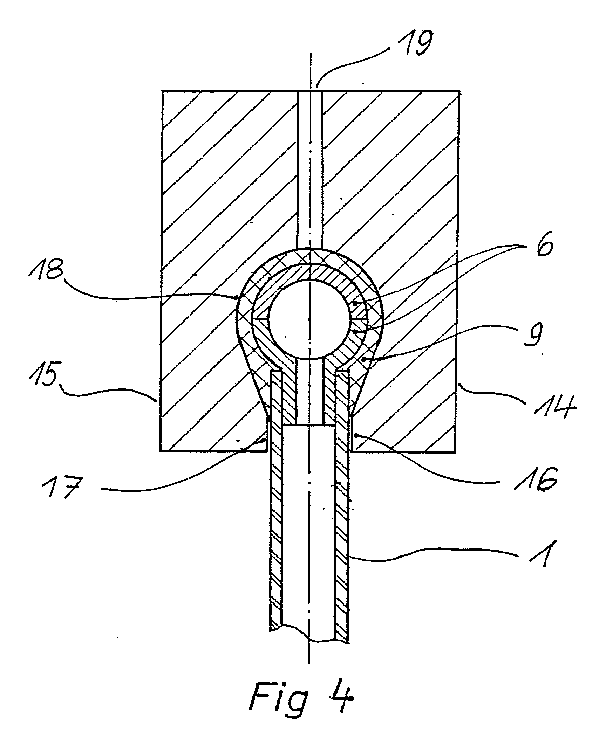

In Figur 4 ist ein Formwerkzeug zur Erzeugung der extrudierten Schicht 9 im Querschnitt dargestellt.

Der innere Teil des Sammelrohres 6, der den Rohrhohlraum einschließt, wird erfindungsgemäß aus wenigstens zwei Segmenten 7 und 8, die sich in Längsrichtung des Sammelrohres erstrecken, zusammengesetzt. Die einzelnen Segmente lassen sich durch Spritzgießen ohne hohe Fertigungskosten wesentlich einfacher herstellen als ein einstückiges Rohr. Die Segmente 7 und 8 werden vor der Fertigstellung des Wärmetauschers zusammengefügt und mit der Stirnseite des Austauscherkörpers 1 in der Weise in Verbindung gebracht, daß ein offener Durchgang von dem Rohrhohlraum 6 zu den Durchflußkanälen 5 besteht. Nach dieser Anordnung der einzelnen Teile wird die umhüllende Schicht 9 erzeugt. Sie hält die Segmente 7 und 8 des Sammelrohres zusammen und stellt gleichzeitig die Verbindung zwischen dem Sammelrohr 6 und dem Austauscherkörper 1 her. Die Schicht 9 macht eine haftende Verbindung der Segmente 7, 8 untereinander oder mit dem Austauscherkörper entbehrlich, so daß Kleb- oder Schweißvorgänge beim Zusammensetzen der Einzelteile entfallen können. Die Schicht 9 wird mittels eines das Sammelrohr und den Rand des Austauscherkörpers umgreifenden Formwerkzeuges durch Extrusion hergestellt, wobei das Werkzeug während der Extrusion an den zusammengefügten Teilen 1, 7 und 8 entlang geführt wird oder umgekehrt. Infolge der kurzen Fließwege kann man mit einem verhältnismäßig geringen Schmelzendruck arbeiten, der jedoch für eine feste Verschweißung der Schicht 9 mit den Rohrsegmenten 7 und 8 ausreicht. Diese werden in der kurzen Kontaktzeit mit der Schmelze nicht völlig durchwärmt und deshalb auch nicht durch den Schmelzendruck zusammengedrückt. Die Schicht 9 wird so dick ausgeführt, daß sie den Druck des im Betriebszustand durch das Sammelrohr strömenden Mediums aufzunehmen vermag. Ebenso muß die Verbindung mit dem Austauscherköper 1 genügend fest sein, um eine Ablösung des Sammelrohres sicher zu verhindern.

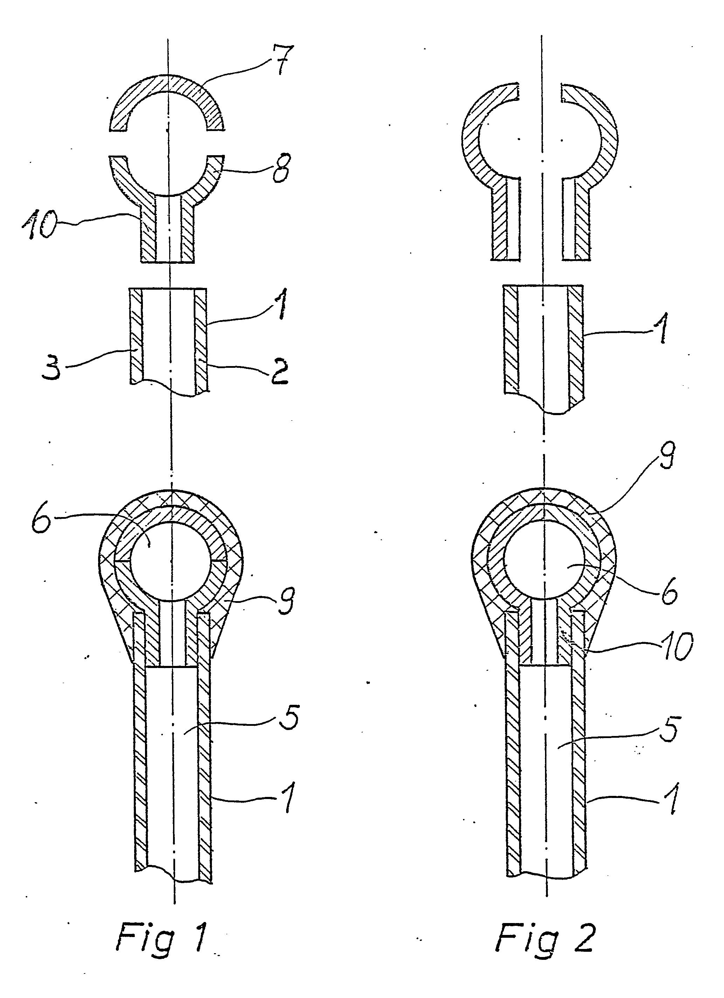

Der innere Teil des Sammelrohres kann in verschiedenen Trennungsebenen parallel zur Längsachse in Segmente geteilt sein. Bei der Ausführungsform gemäß Figur 1 verläuft die Trennungsebene parallel zur Stirnseite des Austauscherkörpers durch die Sammelrohrachse. Das an der Stirnseite anliegende Segment 8 ist mit Durchbrüchen zu den Durchflußkanälen 5 versehen. Diese Durchbrüche können als angeformte Rohrstutzen 10 ausgebildet sein. Im Falle der Figur 2 liegt die Teilungsebene des Sammelrohres in der Mittelebene des Austauscherkörpers. In diesem Falle sind auch die Rohrstutzen 10 aus zwei Segmenten zusammengesetzt. Die in die Durchflußkanäle 5 hineinragenden Rohrstutzen 10 dienen nicht nur zur vorübergehenden Befestigung des Segments 8 an dem Austauscherkörper 1, sondern sie verstärken den Endabschnitt des Austauscherkörpers in dem Bereich, wo an der Außenseite die Schicht 9 angefügt wird. Bei der Ausbildung dieser Schicht durch Extrusion wirkt ein erheblicher Formmassendruck auf den Rand des Austauscherkörpers ein. In der Regel ist der Austauscherkörper so dimensioniert, daß er diesem Druck alleine nicht gewachsen ist. Die Rohrstutzen 10 werden daher so stark ausgebildet, daß während der Extrusion der Schicht 9 nicht ihr gesamter Querschnitt über die Glastemperatur erwärmt wird, und daß sie den Rand des Austauscherkörpers gegen den Formmassendruck zu stützen vermögen.

Gemäß einer bevorzugten Ausführungsform der Neuerung besitzt das Segment 8 am Ende 11 zwei Zapfen 12 und 14 ohne Durchlaß. Die dazwischen eindringende Formmasse bewirkt auch am Außenrand der wärmetauscherplatte eine dichte Verbindung mit dem Sammelrohr.

Gemäß einer weiteren bevorzugten Ausführungsform ragt das Sammelrohr 6 wenigstens an einer Seite über den Rand des Austauscherkörpers 1 hinaus. Der herausragende Abschnitt 13 dient als Anschlußstutzen zum Ein- oder Auslaß des Wärmeaustauschmediums.

Vorzugsweise bestehen die Sammelrohrsegmente, der Austauscherkörper und die Schicht 9 aus dem gleichen oder einem gleichartigen Kunststoff. Die Kunststoffe sind untereinander gleichartig, wenn sie bei etwa gleichen Temperaturen schmelzflüssig werden und in diesem Zustand miteinander verschweißen und nach dem Abkühlen eine dauerhafte Verbindung ergeben. Geeignete Kunststoffe sind z.B. Polymethylmethacrylat, Polystyrol, Polyvinylchlorid, oder Polycarbonat. Besonders geeignet sind Polyolefine, insbesondere Polypropylen. Die Kunststoffe können eingefärbt oder pigmentiert sein. Wenn die Verwendung als Sonnenkollektor beabsichtigt ist, wird ein Kunststoff mit einer Wärmestrahlung absorbierenden Einfärbung verwendet. Eine schwarze Einfärbung mit Ruß ist für diesen Zweck am besten geeignet.

Bei der bevorzugten Aufbringung der Schicht 9 aus dem gleichen oder einem gleichartigen Kunststoff wie die Teile 1, 7 und 8 durch Extrusion im schmelzflüssigen Zustand wird die Grenzschicht zwischen der Schicht 9 und den Teilen 1, 7 und 8 aufgeschmolzen, so daß diese Teile mit der Schicht 9 fest verschweißt werden. Dagegen sind die Teile 1, 7 und 8 miteinander nicht verschweißt. Sie können jedoch vor der Umhüllung mit der Schicht 9 miteinander verklebt, verschweißt, oder anderweitig verbunden werden.

Die Wärmeaustauscher gemäß der Neuerung können von gasförmigen oder flüssigen Wärmetauschmedien durchströmt werden, die gegenüber dem verwendeten Kunststoff inert sind. Die Betriebstemperatur des Wärmetauschers soll unterhalb der Erweichtemperatur des Kunststoffs liegen. Im Betriebszustand kann der Wärmetauscher von einem anderen flüssigen oder gasförmigen wärmeaufnehmenden oder -abgebenden Medium umgeben sein oder es kann ein Wärmeaustausch mit einfallender Strahlungswärme, insbesondere Sonnenstrahlung, stattfinden. Im Gegensatz zu den eingangs erwähnten bekannten Wärmetauschern ist es weder für die Herstellung noch für den Betrieb der neuen Wärmetauscher erforderlich, dickwandige Sammelrohre 6 anzubringen. Vorzugsweise ist das Verhältnis der Wanddicke der Sammelrohre zu deren größtem Innendurchmesser nicht mehr als doppelt so groß wie das Verhältnis der Wanddicke der Außenwände des Austauscherkörpers zu dessen Innendurchmesser. Diese Verhältnisse werden allein nach den vorgegebenen Festigkeitsanforderungen und dem Druck des durchströmenden Wärmeaustauschmediums festgelegt.

Das für die Herstellung der Wärmetauscher verwendete Formwerkzeug hat die Merkmale des Anspruchs 10. Es ist ähnlich aufgebaut wie die bekannten Werkzeuge zur Umhüllung von Kabeln oder dergleichen mit einer extrudierten Kunststoffschicht. Während diese Werkzeuge einen rundum geschlossenen Querschnitt des Formkanals haben, ist der Querschnitt beim vorliegenden Werkzeug hufeisenförmig, wobei der Rand des mit der umhüllenden Schicht 9 auszurüstenden Austauscherkörpers mit dem aufgesetzten Sammelrohr 9 an der offenen Seite in das Werkzeug hineinragt. Es enthält zwei Schenkel 14, 15, die an der Basis miteinander verbunden sind und zwischensich einen seitlich offenen Einlaufkanal und einen in Extrusionsrichtung dahinter angeordneten, ebenfalls seitlich offenen Formkanal 18 ein schließen. Im Einlaufkanal des Werkzeugs liegen die Werkzeugschenkel 14, 15 dicht schließend an der Oberfläche des Austauscherkörpers bzw. des Sammelrohres an. Im Bereich des Formkanals 18 laufen die Schenkel 14, 15 an ihren Enden in Dichtlippen 16, 17 aus. Die Dichtlippen 16, 17 haben einen Abstand, der der Dicke des Austauscherkörpers entspricht und stehen im Betriebszustand mit dem Rand des Austauscherkörpers in dichtender Berührung. Innerhalb des von den Dichtlippen begrenzten Querschnittsbereichs hat der Formkanal einen Abstand von dem hineinragenden Rand, der der Dicke der umhüllenden Schicht 9 entspricht.

Die thermoplastische Formmasse wird durch eine Formmassenleitung 19 vom Extruder in den Formkanal 18 eingespeist.

In der Regel wird mit einem feststehenden, an einen ebenfalls feststehenden Extruder angeschlossenen Formwerkzeug gearbeitet. Der Rand des Austauscherkörpers 1 wird in diesem Falle mit einer geeigneten Vorschubvorrichtung in den Einlaufkanal und weiter durch den Formkanal bewegt. Im kontinuierlichen Betrieb ist es zweckmäßig, die nacheinander mit dem Randprofil auszurüstenden Austauscherkörper 1 in ununterbrochener Folge durch das Formwerkzeug hindurchzuführen. Dabei wird ein durchlaufendes Randprofil erzeugt, das nach dem Austritt aus dem Werkzeug an den Stoßstellen zwischen den einzelnen Austauscherkörpern 1 mit einer geeigneten Trennvorrichtung zerteilt werden kann. Die Vorschubvorrichtung kann mit einem Gegenlager ausgerüstet sein, welches verhindert, daß der Austauscherkörper 1 durch den Druck der Formmasse seitlich aus dem Werkzeug herausgedrückt wird. Ein solches Gegenlager ist entbehrlich, wenn gleichzeitig an zwei gegenüberliegenden parallelen Rändern eines Austauscherkörpers 1 jeweils eine umhüllende schicht 9 erzeugt wird.

Wenn der mit einer schicht 9 auszurüstende Wärmetauscher groß oder unhandlich oder nicht ortsbeweglich ist, kann es einfacher sein, mit einem beweglichen Formwerkzeug zu arbeiten, das an dem Rand des feststehenden Austauscherkörpers 1 entlanggeführt wird.

**Patentansprüche**

1. Wärmetauscher aus Kunststoff, bestehend aus einem extrudierten, plattenförmigen Austauscherkörper (1) aus Kunststoff, der aus zwei parallelen, ebenen Außenwänden (2, 3) und einer Vielzahl von diese verbindenden Stegen (4) aufgebaut ist, wobei zwischen den Außenwänden (2, 3) und den Stegen (4) eine Vielzahl von parallelen, durchlaufenden, an den Stirnseiten des Austauscherkörpers endenden Durchflußkanälen (5) gebildet werden, sowie aus zwei Sammelrohren (6) aus Kunststoff, die mit dem Austauscherkörper an dessen Stirnseiten mittels einer umhüllenden, auf den Austauscherkörper übergreifenden Schicht (9) aus Kunststoff verbunden sind und in die die Durchflußkanäle (5) einmünden, dadurch gekennzeichnet, daß die Sammelrohre (6) jeweils aus wenigstens zwei in Längsrichtung angeordneten Segmenten (7, 8) zusammengesetzt sind, auf die die umhüllende Schicht (9) mittels eines relativ zum Sammelrohr (6) bewegten Formwerkzeugs aufextrudiert ist.

2. Wärmetauscher nach Anspruch 1, dadurch gekennzeichnet, daß die Segmente (7, 8) der Sammelrohre (6) untereinander und mit der Stirnseite des Austauscherkörpers unverbunden sind und daß die umhüllende Schicht (9) mit den Segmenten (7, 8) und den Außenwänden (2, 3) des Austauscherkörpers (1) verschweißt ist.

3. Wärmetauscher nach den Ansprüchen 1 und 2, dadurch gekennzeichnet, daß das Verhältnis der Wanddicke der Sammelrohre (6) zu deren größtem Innendurchmesser nicht mehr als doppelt so groß wie das Verhältnis der Wanddicke der Außenwände (2, 3) des Austauscherkörpers (1) zu dessen Innendurchmesser ist.

4. Wärmetauscher nach den Ansprüchen 1 bis 3, dadurch gekennzeichnet, daß die Sammelrohre (6) Rohrstutzen (10) aufweisen, die in die Durchflußkanäle (5) hineinragen.

5. Wärmetauscher nach Anspruch 4, dadurch gekennzeichnet, daß die Sammelrohr parallel zur Stirnseite des Austauscherkörpers (1) in Segmente (7) und (8) geteilt sind und daß das an der Stirnseite des Austauscherkörpers (1) anliegende Segment (8) die Rohrstutzen (10) trägt.

6. Wärmetauscher nach den Ansprüchen 1 bis 5, dadurch gekennzeichnet, daß die randständige Kammer (11) des Austauscherkörpers (1) nicht mit dem Sammelrohr (6) in offener Verbindung steht und ein Zapfen (12) des der Stirnseite anliegenden Segments (8) in die Kammer (11) hineinragt.

7. Wärmetauscher nach den Ansprüchen 1 bis 6, dadurch gekennzeichnet, daß wenigstens ein Ende des Sammelrohres (6) als Anschlußstutzen (13) seitlich den Austauscherkörper (1) überragt.

8. Wärmetauscher nach den Ansprüchen 1 bis 7, dadurch gekennzeichnet, daß er aus Polypropylen besteht.

9. Wärmetauscher nach den Ansprüchen 1 bis 8, dadurch gekennzeichnet, daß er aus einem Wärmestrahlung absorbierend eingefärbten Kunststoff besteht.

10. Formwerkzeug zur Herstellung eines Wärmetauschers nach den Ansprüchen 1 bis 9 durch Extrusion einer thermoplastischen Schicht (9) längs des Sammelrohres (6), dadurch gekennzeichnet, daß das Formwerkzeug zwei an der Basis verbundene Schenkel (14, 15) enthält, die zwischen sich einen Einlaufkanal und einen in Extrusionsrichtung dahinter angeordneten Formkanal (18) einschließen, wobei die Schenkel (14, 15) im Bereich des Formkanals (18) in zwei Dichtlippen (16, 17) auflaufen, zwischen denen ein freier Abstand besteht, der mit der Randdicke des Austauscherkörpers (1) übereinstimmt, der freie Querschnitt des Einlaufkanals dem Querschnitt des Sammelrohrs (6) und dem daran angrenzenden Rand des Austauscherkörpers angepaßt ist und der freie Querschnitt im Bereich des Formkanals (18) um die Querschnittsfläche der zu bildenden Schicht (9) größer als der freie Querschnitt des Einlaufkanals ist.

## Revendications

1. Echangeur thermique en matière synthétique, constitué par un corps échangeur (1) extrudé en matière synthétique, en forme de plaque, qui se compose de deux parois extérieures (2, 3) planes et parallèles et d'une multiplicité de cloisons transversales (4) reliant ces parois et dans lequel il est formé, entre les parois extérieures (2, 3) et les cloisons transversales (4), une multiplicité de conduits de circulation (5) continus en parallèles, se terminant sur les côtés frontaux du corps échangeurs, ainsi que par deux tuyaux collecteurs (6) en matière synthétique qui sont reliés au corps échangeur, au niveau des côtés frontaux de celuici, au moyen d'une couche (9) de matière synthétique qui les engaine et empiète sur le corps échangeur, tuyaux collecteurs dans lesquels débouchent les conduits de circulation, caractérisé en ce que chacun des tuyaux collecteurs (6) est composé d'au moins deux segments (7, 8) disposés en direction longitudinale, sur lesquels la couche enveloppante (9) est appliquée par extrusion au moyen d'un outil de formage qui est déplacé par rapport au tuyau collecteur (6).

2. Echangeur thermique selon la revendication 1, caractérisé en ce que les segments (7, 8) des tuyaux collecteurs (6) ne sont pas unis entre eux, ni au côté frontal du corps échangeur (1) et en ce que la couche enveloppante (9) est soudée aux segments (7, 8) et aux parois extérieures (2, 3) du corps échangeur (1).

3. Echangeur thermique selon la revendication 1 ou 2, caractérisé en ce que le rapport de l'épaisseur de paroi des tuyaux collecteurs (6) au plus grand diamètre de ceux-ci n'est pas supérieur au double du rapport de l'épaisseur des parois extérieures (2, 3) du corps échangeur (1) au diamètre intérieur de celui-ci.

4. Echangeur thermique selon l'une quelconque des revendications 1 à 3, caractérisé en ce que les tuyaux collecteurs (6) comportent des tubulures (10) qui s'engagent dans les conduits de circulation (5).

5. Echangeur thermique selon la revendication 4, caractérisé en ce que les tuyaux collecteurs (6) sont divisés en segments (7) et (8) parallèlement au côté frontal du corps échangeur (1) et en ce que c'est le segment (8) contigu au côté frontal du corps échangeur (1) qui porte les tubulures (10).

6. Echangeur thermique selon l'une quelconque des revendications 1 à 5, caractérisé en ce que la chambre d'extrémité (11) du corps échangeur (1) n'est pas en communication libre avec le tuyau collecteur (6) et en ce qu'un tampon (12) du segment (8) contigu au côté frontal pénètre dans cette chambre (11).

7. Echangeur thermique selon l'une quelconque des revendications 1 à 6, caractérisé en ce qu'une extrémité au moins du tuyau collecteur (6) fait saillie latéralement sur le corps échangeur (1) en formant une tubulure de raccordement (13).

8. Echangeur thermique selon l'une quelconque des revendications 1 à 7, caractérisé en ce qu'il est fait de polypropylène.

9. Echangeur thermique selon l'une quelconque des revendications 1 à 8, caractérisé en ce qu'il est fait d'une matière synthétique colorée de manière à absorber le rayonnement calorifique.

10. Outil de formage pour la fabrication d'un échangeur thermique selon l'une quelconque des revendications 1 à 9, par extrusion d'une couche thermoplastique (9) le long du tuyau collecteur (6), caractérisé en ce qu'il comprend deux branches (14, 15) unies à la base, délimitant entre elles un canal d'entrée et, en arrière de celui-ci dans le sens de l'extrusion, un canal de formage (18), les branches (14, 15) se terminant, dans la région du canal de formage (18), en deux lèvres d'étanchéité (16, 17) entre lesquelles est ménagée une distance qui correspond à l'épaisseur du bord du corps échangeur (1), la section libre du canal d'entrée étant adaptée à la section du tuyau collecteur (6) et au bord contigu du corps échangeur et la section libre du canal de formage (18) étant plus grande que la section libre du canal d'entrée, dans une mesure qui correspond à l'aire de la section de la couche (9) à former.

## Claims

1. Heat exchanger made of plastics, consisting of an extruded lamellar exchanger body (1) of plastics material which is made up of two parallel planar outer walls (2, 3) and a plurality of crosspieces (4) connecting them, whilst between the outer walls (2, 3) and the crosspieces (4) are formed a plurality of parallel, continuous throughflow channels (5) terminating at the end faces of the exchanger body, and of two collecting pipes (6) of plastics material which are connected to the exchanger body at the end faces thereof by means of a layer (9) of plastics enveloping and engaging over the exchanger body, and into which the throughflow channels (5) open, characterised in that the collecting pipes (6) are each composed of at least two longitudinally disposed segments (7, 8) onto which the enveloping layer (9) is extruded by means of a moulding tool which is moved relative to the collecting pipe (6).

2. Heat exchanger as claimed in claim 1, characterised in that the segments (7, 8) of the collecting pipes (6) are not connected to one another or to the end face of the exchanger body and in that the enveloping layer (9) is welded to the segments (7, 8) and to the outer walls (2, 3) of the exchanger body (1).

3. Heat exchanger as claimed in one of claims 1 and 2, characterised in that the ratio of the wall thickness of the collecting pipes (6) to the maximum internal diameter of said pipes is not more than twice the ratio of the wall thickness of the outer walls (2, 3) of the exchanger body (1) to the internal diameter of said body (1) to the internal diameter of said body.

4. Heat exchanger as claimed in claims 1 to 3, characterised in that the collecting pipes (6) have pipe connections (10) which project into the throughflow channels (5).

5. Heat exchanger as claimed in claim 4, characterised in that the collecting pipes are divided into segments (7) and (8) parallel to the end face of the exchanger body (1) and in that the segment (8) abutting on the end face of the exchanger body (1) carries the pipe connections (10).

6. Heat exchanger as claimed in claims 1 to 5, characterised in that the chamber (11) of the exchanger body (1) nearest the edge is not openly connected to the collecting pipe (6) and a lug (12) of the segment (8) abutting on the end face projects into the chamber (11).

7. Heat exchanger as claimed in claims 1 to 6, characterised in that at least one end of the collecting pipe (6), in the form of a connecting piece (13), projects laterally over the exchanger body (1).

8. Heat exchanger as claimed in claims 1 to 7, characterised in that it consists of polypropylene.

9. Heat exchanger as claimed in claims 1 to 8, characterised in that it consists of a plastics material coloured so as to absorb thermal radiation.

10. Moulding tool for the production of a heat exchanger as claimed in claims 1 to 9 by extruding a thermoplastic layer (9) along the collecting pipe (6), characterised in that the moulding tool contains two legs (14, 15) joined at the base, enclosing between them an inlet channel and a mould channel (18) mounted behind it in the direction of extrusion, whilst in the region of the mould channel (18) the legs (14, 15) terminate in two sealing lips (16, 17) between which there is a free space which corresponds to the thickness of the edge of the exchanger body (1), the free cross section of the inlet channel is adapted to the cross section of the collecting pipe (6) and the adjoining edge of the exchanger body, and the free cross section in the region of the mould channel (18) is greater than the free cross section of the inlet channel by an amount equal to the cross sectional area of the layer (9) which is to be formed.

Fig 1

Fig 2

Fig 3

Fig 4